# EUROPEAN PATENT APPLICATION

(11) **EP 3 106 221 A1**
(43) Date of publication of application: **21.12.2016**
(21) Application number: 15172157.8
(22) Date of filing: 15.06.2015
(51) Int. Cl.: B01J 27/26, B01J 31/16

(54) **PROCESS FOR PREPARING DOUBLE METAL CYANIDE CATALYSTS AND THEIR USE IN POLYMERIZATION REACTIONS**

(71) Applicant: Universität Hamburg, 20148 Hamburg (DE)
(72) Inventor: Luinstra, Gerrit Albert, 22523 Hamburg (DE); Nörnberg, Benjamin, 22145 Stapelfeld (DE)
(74) Representative: Uexküll & Stolberg

(57) **Abstract**

The present invention is directed to a process for preparing a double metal cyanide catalyst of Formula I (Mₐ[M'(CN)_{c}Z_{w}]_{b}·zA), wherein M is a main group or transition metal cation, M' is a main group or transition metal cation, which can be the same or different from M, Z is an anion or ligand other than cyanide, A is an amphiphilic agent selected from heteroatom-containing organic compounds having at least one polar head group and an aliphatic, aromatic or partially aromatic moiety having a number of 6 to 42 carbon atoms, w is an integer greater than or equal to 0, but lower than c; a, b and c are integers greater than or equal to 1 so that catalyst (I) is electrically neutral, and z is a number from 0 to 12, which process comprises (a) reacting a metal salt of Formula II (MₑX_{f}), wherein X is an anion and e and f are integers greater than or equal to 1 so that metal salt (II) is electrically neutral, with a cyanometallate complex of Formula III (D_{g}[M'(CN)_{c}]_{b}), wherein D is a cation and g is an integer greater than or equal to 1 so that complex (III) is electrically neutral, and M', Z, c, w and b are defined as described above, in the presence of the amphiphilic agent A and optionally a solvent L to obtain a double metal cyanide adduct of Formula IV (Mₐ[M'(CN)_{c}]_{b}·xA·yL), wherein x is a number greater than or equal to 1 and y is a number greater than or equal to 0; and (b) thermally treating the adduct (IV) to obtain the double metal cyanide catalyst of Formula (I).

## Description

### FIELD OF THE INVENTION

The present invention relates to a process for the preparation of a double metal cyanide (DMC) catalyst, to a double metal cyanide catalyst *per se,* and to its use in polymerization processes, such as a process for the polymerization of alkylene oxides.

### BACKGROUND OF THE INVENTION

Polyether polyols (poly(alkylene oxide) polymers) are widely used, such as in the production of detergents, superplasticizers and polyurethanes. Double metal cyanide (DMC) complexes represent a rather recent class of catalysts suitable for the production of polyether polyols. Compared to polymers prepared by alkali or earth alkali hydroxide catalysts, polyether polyols prepared with DMC catalysts are characterized by a rather low unsaturation level and a rather narrow molecular weight distribution. Both properties are required for the production of high quality polyurethanes. Hence, DMC catalysts represent a useful class of catalysts.

Besides the use of DMC catalysts for the homopolymerization of alkylene oxides, like propylene oxide and ethylene oxide, their use in the copolymerization of alkylene oxides with CO₂ to yield polyether carbonate polyols (US 4,500,704, WO 2013/010986, WO 2013/011015, WO 2012/136657, and WO 2012/136658) and in the terpolymerization of alkylene oxides, CO₂ and cyclic anhydrides to yield polyether-ester-carbonate polyols (WO 2013/087582) is known. Therefore, DMC catalysts allow the modification of material properties by selective incorporation of co-monomers. For example, biodegradability can be imparted to the polymer in this way.

The polymerization reaction mixture typically comprises a DMC catalyst, one or more monomers and optionally a so-called starter substance. The starter substance can be selected from the group consisting of mono or polyfunctional alcohols, amines or other H-functional compounds. By controlling the ratio of monomer(s) to starter substance(s) it is possible to control the molecular weight of the polymer and the number of terminal groups in the polymer chain.

Double metal cyanide catalysts are generally prepared by reacting a metal salt, such as zinc chloride, with an alkali metal hexacyanometallate, such as potassium hexacyanocobaltate, in aqueous solution. The resulting double metal cyanide complexes are heterogeneous catalysts. For instance, a single crystal X-ray diffraction analysis of Zn₃[Co(CN)₆]₂·12 H₂O shows that this complex is a three-dimensional coordination polymer comprising bivalent zinc atoms which are linked with cobalt atoms via cyanide bridges. The spaces between the metal atoms are too small that monomers like alkylene oxides and CO₂ could penetrate into the crystal. Hence, without being bound by any theory it is assumed that the polymerization reaction takes place on the surface of the catalyst particles only. Thus, DMC catalysts are heterogeneous catalysts and small catalyst particles having a high surface-to-volume ratio are believed to have an advantage effect on the catalyst activity. If the particle dimensions are reduced to the nanometer scale, there is another benefit: nanoparticles scatter visible light to a very small degree only. Consequently, despite of catalyst residues the polymerization products are substantially less opacified compared to polymerization products obtained by micrometer-scale or millimeter-scale catalyst particles. The synthesis of nanoscopic double metal cyanides is for example described in Polymer 2011, 52, page 5494. However, the particles described in this reference are in the form of nano-lamelae, i.e. nanoscopic with respect to one dimension only.

A disadvantage with the use of DMC catalysts is that these catalysts generally require activation times of several minutes or even more than one hour which has a negative impact on the polymerization time cycles. As used herein, the activation time is also referred to as "induction period" to denote the initial period of time of a polymerization reaction during which the catalyst does not show any substantial or a substantially reduced catalytic activity. After the induction period, the polymerization reaction accelerates. It is known that induction periods obtained with DMC catalysts may *inter alia* depend on the way of catalyst preparation and on the contents of water and other impurities present in the catalyst. In other words, a DMC catalyst is not catalytically active immediately after contacting it with alkylene oxides or other monomers. The polymerization starts only after the induction period.

The kinetics for the polymerization of alkylene oxides with DMC catalysts and the reasons for the occurrence of the induction period are not known. In particular, there is no model which allows a prediction of the length of the induction period. Knowledge of the length of the induction period for a given DMC catalyst is however of utmost importance because abrupt temperature peaks due to an unexpected activation of the catalyst would result in that reaction heat is accumulated which can lead to runaway reactions. Therefore, the occurrence of induction periods poses a high risk to health, safety, property and environment and it is necessary to determine the induction period of a given polymerization system (mixture of DMC catalyst, monomer(s) and starter substances at specific polymerization conditions) in laboratory or pilot plants which is time consuming and expensive. Accordingly, the installation of new production capacities requires high development expenses and safety efforts. Furthermore, the polydispersity, i.e. the ratio of the weight average molecular weight to the number average molecular weight, can be increased by occurrence of an induction period, which is undesirable for most applications.

In order to deal with the problem of induction periods, it is known to provide suitable process engineering measures, such as catalyst activation in a separate reaction step or an upstream plant, and/or to use additional promoting agents.

For example, WO 98/52689 describes a process for shortening the induction period of DMC catalysts by removing water residues via co-evaporation with organic solvents or via introduction of inert gases.

Furthermore, WO 01/10933 describes the shortening of the induction period of DMC catalysts by continuous dosing of the alkylene oxide monomer to a concentrated mixture of DMC catalyst and starter substance.

WO 03/066706 teaches the shortening of the induction period by introducing alkylene oxide to a mixture of DMC catalyst and starter substance at an internal reactor pressure of less than 1 bar.

WO 2013/010987 describes the activation of DMC catalysts for the manufacture of polyether carbonate diols in the presence of heterocumulenes, such as isocyanates, as so-called promoting agents. However, isocyanates are in general very toxic so that a complete conversion or removal of the isocyanates has to be provided for in order to make the produced material available for later use.

Moreover, WO 2012/156431 discloses a DMC catalyst which is said to show a reduced induction period if a polyether polyol triol is added as polymerization initiator and severely dried before charging the catalyst and the monomers to the polymerization reactor. However, despite the addition of very dry polymerization initiator the induction period and, therefore, the problems associated therewith have not been completely avoided.

All in all, the provision of additional process steps and/or the use of additional promoting agents cause additional expenditures and costs due to increased cycle times in case of batch reactions or additional plant components in case of continuous production plants, or due to additional costs for solvents or chemicals used for activation.

Hence, there is still a need for nanoscopic DMC catalysts which are active for the production of alkylene oxide based polymers without use of additional process steps and further promoting agents and which catalysts do not show an induction period. Furthermore, the active form of such catalysts should be stable when stored and should be easy to handle, i.e. it should have a certain degree of stability against moisture and oxygen. In addition, it would be desirable that the synthesis of the DMC catalyst can be carried out in very few reaction steps starting from freely available base chemicals.

It is therefore an object of the present invention to provide a process for preparing a nanoscopic DMC catalyst which shows no induction period in the polymerization of alkylene oxides, binary mixtures of monomers selected from alkylene oxides, CO₂, cyclic carboxylic acid anhydrides, cyclic esters and amides or ternary mixtures of said monomers. Preferably, the catalyst should have a high activity which allows the manufacture of polymer products with a low content of catalyst residues. Furthermore, it would be useful to obtain polymer products which are as colorless as possible and have a low polydispersity.

These objects are surprisingly achieved by the process according to claims 1 to 13 and the double metal cyanide catalyst according to claim 14. The invention also relates to the use of the double metal cyanide catalyst according to claim 15.

### SUMMARY OF THE INVENTION

In a first aspect, the present invention relates to a process for preparing a double metal cyanide (DMC) catalyst of Formula I

Mₐ[M' (CN)_{c}Z_{w}]_{b}·zA (I),

wherein
M is a main group or transition metal cation,
M' is a main group or transition metal cation, which can be the same or different from M,
Z is an anion or ligand other than cyanide and is preferably selected from the group consisting of chloride, bromide, iodide, azide, alcoholate, carbonyl, carboxylate, cyanate, hydroxide, isocyanate, nitrosyl, nitrate, thiocyanate and water,
A is an amphiphilic agent selected from heteroatom-containing organic compounds having at least one polar head group and an aliphatic, aromatic or partially moiety having a number of 6 to 42 carbon atoms,
w is an integer greater than or equal to 0, but lower than c,
a, b and c are integers greater than or equal to 1 so that catalyst (I) is electrically neutral, and
z is a number from 0 to 12, and preferably is higher than 1,
wherein the process comprises
(a) reacting a metal salt of Formula II

   MₑX_{f} (II),

   wherein
   M is a cation as defined above,
   X is an anion and
   e and f are integers greater than or equal to 1 so that metal salt II is electrically neutral,
   with a cyanometallate complex of Formula III

   D_{g}[M' (CN)_{c}Z_{w}]_{b} (III),

   wherein
   D is a cation,
   g is an integer greater than or equal to 1 so that complex III is electrically neutral, and
   M', Z, c, w and b are defined as described above in the presence of the amphiphilic agent A and optionally a solvent L to obtain a double metal cyanide adduct of Formula IV

   Mₐ[M' (CN)_{c}]_{b}·xA·yL (IV),

   wherein
   x is a number greater than or equal to 1 and
   y is a number greater than or equal to 0; and
(b) thermally treating the adduct IV to obtain the double metal cyanide catalyst of Formula I.

In a second aspect, the present invention is directed to a DMC catalyst obtained according to the process of the first aspect.

Furthermore, the invention is in a third aspect directed to the use of the DCM catalyst of the second aspect in polymerization reactions.

### BRIEF DESCRIPTION OF THE DRAWINGS

- Figure 1: shows a SEM picture of a DMC catalyst according to the invention,
- Figure 2: shows the reaction temperature observed in the copolymerization of propylene oxide and CO₂ as a function of reaction time, and
- Figure 3: shows the CO₂ uptake rate observed in the copolymerization of propylene oxide and CO₂ as a function of reaction time.

### DETAILED DESCRIPTION OF THE INVENTION

In step (a), the process of the invention comprises the synthesis of a DMC amphiphile adduct Mₐ[M' (CN)_{c}Z_{z}]_{b} ·xA·yL (IV). This step is generally performed by reacting a metal salt MₑX_{f} (II) with a cyanometallate complex D_{g}[M'_{b}(CN)_{c}Z_{w}] (III) in the presence of an amphiphilic agent A.

The metal salt used in step (a) is a compound of Formula II

MₑX_{f} (II),

wherein
M is a main group or transition metal cation,
X is an anion, and
e and f are integers greater than or equal to 1 so that metal salt II is electrically neutral.

In a preferred embodiment, cation M is selected from the group consisting of Ag(I), Al(III), Ce(III), Ce(IV), Cd(II), Co(II), Co (III), Cr(II), Cr(III), Cu(II), Eu(III), Fe(II), Fe(III), La (III), Mg (II), Mn(II), Mo(IV), Mo (VI), Ni(II), Pb(II), Rh(II), Ru(II), Ru(III), Sn(II), Sn(IV), Sr(II), Ti(III), Ti(IV), V(V) V(IV), W(IV), W(VI), Zn(II) and mixtures thereof. In particular, cation M is Zn(II).

Moreover, it is preferred that anion X is selected from the group consisting of acetate, acetylacetonate, carboxylate, carbonate, cyanate, cyanide, dihydrogen phosphate, halide, such as chloride, bromide and iodide, hexafluorophosphate, hydroxide, hydrogen carbonate, hydrogen phosphate, hydrogen sulfate, isocyanate, isothiocyanate, nitrate, nitrite, oxalate, perchlorate, phosphate, sulfate, tetrafluoroborate, tetrakis(4-biphenylyl)borate tetrakis(4-tert-butylphenyl)borate, tetrakis[3,5-bis(1,1,1,3,3,3-hexafluoro-2-methoxy-2-propyl)phenyl]borate tetrakis[3,5-bis(trifluoro-methyl)phenyl]borate, tetrakis(pentafluorophenyl)borate, tetra(p-tolyl)borate, tetraphenylborate, thiocyanate, vanadate and mixtures thereof. More preferably, X is selected from the group consisting of nitrate, chloride, bromide, iodide, acetate, benzoate, acetylacetonate, sulfate and combinations thereof. In particular, anion X is nitrate.

Accordingly, the metal salt II is preferably selected from the group consisting of zinc(II) nitrate, zinc(II) chloride, zinc(II) bromide, zinc(II) iodide, zinc(II) acetate, zinc(II) acetylacetonate, zinc(II) benzoate, iron(II) sulfate, iron(II) bromide, iron(II) chloride, iron(III) chloride, cobalt(II) chloride, cobalt(II) thiocyanate, nickel(II) chloride, and nickel(II) nitrate and mixtures thereof. It is particularly preferred that the metal salt II is zinc(II) nitrate.

The metal salt II can also be in the form of a solvate. Examples of suitable solvate forms include hydrates and solvates with organic solvents and combinations thereof. Preferred examples of suitable solvates include hydrates. For instance, zinc(II) nitrate is preferably used in the form of a hydrate, like a hexahydrate.

The cyanometallate complex used in step (a) is a compound of Formula III

D_{g}[M' (CN)_{c}Z_{w}]_{b} (III)

wherein
D is a cation,
M' is a main group or transition metal cation,
Z is an anion or ligand other than cyanide, such as chloride, bromide, iodide, azide, alcoholate, carbonyl, carboxylate, cyanate, hydroxide, isocyanate, nitrosyl, nitrate, thiocyanate and water,
w is an integer greater than or equal to 0, but lower than c, and
g, b and c are integers greater than or equal to 1 so that complex III is electrically neutral.

Examples of suitable cations D include alkali metal ions, such as Li(I), Na(I) and K(I), earth alkali metal ions, such as Mg(II) and Ca(II), non-metallic cations, such as a proton, ammonium, imidazolium and alkylammounium, and mixtures thereof. In particular, D is an alkali metal ion like potassium(I).

In a preferred embodiment, cation M' is selected from the group consisting of Co(II), Co(III), Cr(II), Cr(III), Fe(II), Fe(III), Ir(III), Mn(II), Mn(III), Ni(II), Rh(III), Ru(II), V(IV), V(V) and mixtures thereof. Accordingly, suitable examples of the cyanometallate anion include hexacyanocobaltate and hexacyanoferrate.

Moreover, it is preferred that w is 0 so that anion or ligand Z is absent.

Hence, it is particularly preferred that the compound of Formula III is selected from the group consisting of potassium hexacyanocobaltate, potassium hexacyanoferrate and mixtures thereof.

The cyanometallate complex III can also be in the form of a solvate. Examples of suitable solvate forms include hydrates, solvates with organic solvents and combinations thereof. Preferred examples of suitable solvates include hydrates.

The reaction of step (a) is performed in the presence of an amphiphilic agent A which is a heteroatom-containing organic compound having at least one polar head group and an aliphatic, aromatic or partially aromatic moiety having 6 to 42 carbon atoms, preferably 16 to 20 carbon atoms, or in the presence of a salt of the amphiphilic agent A. In a preferred embodiment, the amphiphilic agent A is a heteroatom-containing organic compound having at least one polar head group and an aliphatic moiety having a chain length of 6 to 42 carbon atoms, preferably 16 to 20 carbon atoms. In a further preferred embodiment, the at least one polar head group of amphiphilic agent A is selected from the group consisting of alcohol, amine, thiol, phosphane, and carboxylic groups. Preferably, the amphiphilic agent A is a primary, secondary or tertiary aliphatic alcohol, amine, thiol, carboxylic acid and/or phosphane.

More preferably, the amphiphilic agent A is a primary aliphatic unbranched amine or carboxylic acid, in particular a primary aliphatic unbranched amine or a primary aliphatic carboxylic acid having 16 to 20 carbon atoms or a salt thereof.

The aliphatic moiety of amphiphilic agent A can be saturated or partially unsaturated.

According to a particularly preferred embodiment, the amphiphilic agent A is selected from the group consisting of n-hexadecylamine, n-octadecylamine, n-eicosylamine, oleylamine, octadecatrien-1-amine, such as 9,12,15-octadecatrien-1-amine, and combinations thereof.

Optionally, the reaction mixture of step (a) further comprises a solvent L. Suitable examples of solvent L include water, alcohols, such as aliphatic alcohols having 1 to 6 carbon atoms like ethanol, methanol, n-propanol, and iso-propanol, ethers, esters, ketones, aldehydes, alkanes, halogenated hydrocarbons, aromatics, sulfoxides, amides, amines, ionic liquids and mixtures thereof.

It is preferred that solvent L is a mixture of water and alcohol and in particular a mixture of water and ethanol. In addition, it is preferred that the volume ratio of ethanol to water in said mixture ranges from 1:100 to 100:1, more preferably from 1:15 to 9:1, like 1:9 to 5:1 or 1:9 to 4:1. Most preferably, the volume ratio of ethanol to water in the reaction mixture of step (a) ranges from 1:9 to 3:1. It has been found that above volume ratios result in DMC catalysts showing a particularly advantageous polymerization performance.

However, the presence of a solvent L is not mandatory. It is also possible that the reaction of step (a) takes place in pure amphiphilic agent A, such as an amphiphilic agent A which is liquid at room temperature or liquid at the reaction temperature in step (a).

The amphiphilic agent A can be added to the reactor in a pure form or in the form of a solution or dispersion in a solvent which can be the same or different from solvent L described above. For example, amphiphilic agent A can be added to the reactor in form of a dispersion in water or an alcohol or a water alcohol mixture. Preferably, A is added to the reactor in form of a dispersion in ethanol.

Investigations have shown that the amount of amphiphilic agent A used in step (a) should preferably correlate to the amount of metal M of metal salt II. In particular, the molar ratio of the number of hydrophilic groups of the amphiphilic agent A to the number of metal M ranges from 1:100 to 100:1 and preferably from 2:1 to 4:1 and more preferably is about 2:1. A molar ratio of less than 2:1 may result in that formation of the desired DMC adduct IV is incomplete.

Hence, when using the preferred amphiphilic agents A described above, the molar ratio of amphiphilic agent A to metal M preferably ranges from 1:100 to 100:1 like from 2:1 to 4.1 and more preferably is about 2:1.

Furthermore, the molar ratio of metal M to metal M' preferably ranges from 1:100 to 100:1, more preferably from 1:4 to 4:1 and most preferably is about 20:19.

In a preferred embodiment of the present invention, first a solution or dispersion of the amphiphilic agent A in solvent L is provided. Then, metal salt II is added to this solution or dispersion in order to obtain a homogeneous mixture of metal salt II and amphiphilic agent A. Subsequently, the cyanometallate complex III is added to this mixture and the resulting reaction mixture is stirred for a certain time to allow the DMC amphiphile adduct IV to precipitate.

The reaction temperature in step (a) is preferably ranging from -20 to 400 °C, more preferably from 0 to 80°C. In particular, step (a) is performed at about room temperature.

At the end of step (a), it is preferred to separate the precipitated DMC amphiphile adduct IV from the reaction mixture. Such a separation can be effected by conventional techniques, such as filtration, centrifugation, sedimentation etc.

The isolated DMC amphiphile adduct IV can then be washed. The washing step is carried out to remove impurities from the adduct that will render the final DMC catalyst less active if they are not removed. Preferably, the adduct IV is washed with the same solvent or solvent mixture L as used in the reaction of step (a).

After the adduct IV has been washed, it can be gently dried, such as at a temperature of about 50°C and under reduced pressure, to obtain a dry DMC amphiphile adduct IV. Drying at more severe conditions, such as at higher temperatures, may lead to a removal of the amphiphilic agent A from the adduct, as will be explained below.

The adduct IV can be crystalline, partially crystalline or amorphous. Crystalline or partially crystalline adducts are preferred.

It has been found out that the DMC amphiphile adduct IV obtained at the end of step (a) does typically not show any substantial catalytic activity in the polymerization of alkylene oxides.

In step (b) of the process according to the present invention, the adduct IV is thermally treated to yield the catalytically active DMC catalyst I. This thermal treatment is preferably performed by heating the adduct IV, in particular under vacuum, at a temperature of 100 to 400°C, such as 120 to 140°C. For example, the adduct IV is dried, in particular under vacuum, at a temperature of 100 to 400°C, such as 120 to 140°C, until the resulting catalyst I reaches a constant weight.

It has been found that the thermal treatment in step (b) results in that at least a part of the amphiphilic agent A and optionally the solvent L is removed from the adduct IV. Moreover, without wishing to be bound by any theory, it is believed that the thermal treatment does not only involve the partial removal of amphiphilic agent A, but also results in a reorganization of the catalyst structure and especially of the catalyst surface structure. In particular, it is believed that the surface of the resulting catalyst particles is functionalized with amphiphilic agent A, such as amines, which is in accordance with the incomplete removal of amphiphilic agent A from adduct IV. Hence, the adduct IV, which per se shows no or only low catalytically activity, serves as a precursor which can be transformed to the active DMC catalyst I.

Optionally, before or after heating in step (b), the adduct IV or catalyst I is crushed or milled, e.g. in a ball mill, to facilitate removal of amphiphilic agent by evaporation and to further reduce the particle size of the resulting catalyst.

It has been surprisingly found that the DMC catalyst I prepared by the process according to the invention via the DMC adduct IV shows a remarkably high catalytic activity useful for alkylene oxide polymerization and does in particular not require long activation times. In fact, no induction period at all occurs when using DMC catalyst according to the invention.

Accordingly, the invention provides in a second aspect a DMC catalyst I obtainable by the process of the invention, i.e.

Mₐ [M' (CN)_{c}Z_{w}]_{b}·zA (I)

and a DMC adduct of Formula (IV)

Mₐ[M' (CN)_{c}]_{b}·xA·yL (IV)

which can be used for the preparation of catalyst I.
M, M', Z, A, L, a, b, c, z, x and y are defined as mentioned above in connection with the first aspect of the invention.

If the metal cation M is a divalent cation, such as Zn(II), integer a is preferably 3 and number x is preferably about 6. Hence, in case of a divalent cation M, such as Zn(II), the ratio of integer a to number x is preferably about 1:2.

Furthermore, it is preferred that in case of a divalent cation M, such as Zn(II), integer a is 3 and number z is about 2 to 3. Accordingly, the ratio of integer a to number z in the final catalyst I is preferably ranging from about 1:1 to 1.5:1.

Elemental analysis of catalysts I and/or adduct IV shows that small amounts of salts may be associated with the catalyst I and/or the adduct IV. For example, if potassium is used as cation D and nitrate is used as anion X, then adduct IV and consequently catalyst I can comprise small amounts of KNO₃. In one embodiment, adduct IV and catalyst I are free from such salts.

In a third aspect, the invention relates to the use of the catalyst in polymerization reactions.

For instance, the DMC catalyst according to the invention is preferably used as a catalyst in the hompolymerization of an alkylene oxide, such as propylene oxide, or a copolymerization or terpolymerization of two or three monomers selected from alkylene oxides, CO₂, cyclic carboxylic acid anhydrides, cyclic carboxylic acid esters and cyclic carboxylic acid amides.

It has been found that the polymers produced by using the DMC catalyst according to the invention are colorless and have a low opacity. Therefore, the present invention also relates to the polymers obtained by using the DMC catalyst in polymerization reactions.

The following examples serve to illustrate the invention in more detail.

### EXAMPLES

### Example 1: Synthesis of Catalyst 1

5.93 g (22.0 mmol) of octadecylamine were dispersed in 15 ml of ethanol in an Erlenmeyer flask (300 ml) equipped with a PTFE magnetic stirrer bar. Subsequently, 135 ml of water were added to form a mixture of ethanol and water having a volume ratio of 1:9. 2.97 g (10 mmol) of zinc nitrate hexahydrate were added to the viscous ethanol-water mixture. After stirring for 30 minutes a homogeneous dispersion was obtained. 2.10 g (6.31 mmol) of potassium hexacyanocobaltate were added to this dispersion resulting in a decrease of viscosity. The resulting mixture was stirred at room temperature for 18 hours. Then the obtained solid was separated by centrifugation at 25,000 m/s², washed three times with a mixture of ethanol and water and was centrifuged again. Finally, the colorless solid was dried under a dynamic vacuum at 50°C for 24 hours.

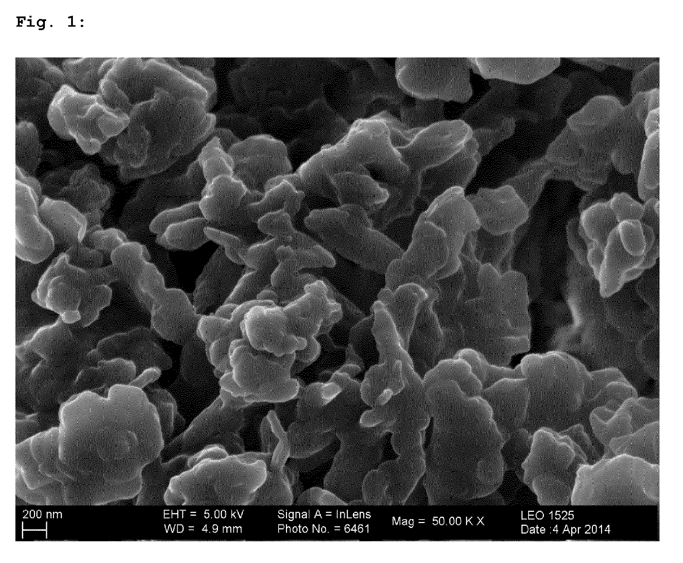

The DMC octadecylamine adduct (6.36 g) obtained thereby was crushed with a glass rod and heated under vacuum to 130°C. Thus, octadecylamine was evaporated and therefore removed from the synthesis residue. 4.00 g of a colorless solid were obtained. This catalyst (Catalyst 1) was catalytically active for the polymerization and copolymerization of propylene oxide. A SEM picture of the obtained catalyst particles (50,000 x magnification) is shown in Figure 1. As can be seen from Figure 1, the catalyst obtained in Example 1 is characterized by a high surface area which renders it particularly suitable for polymerizing propylene oxide with very high activities.

### Examples 2-4: Synthesis of Catalysts 2 to 4

Catalysts 2 to 4 were obtained in accordance with the method of Example 1. Solely the volume ratio of the mixture of ethanol and water used in the preparation of the DMC octadecylamine adduct was varied. The volume ratio of the ethanol water mixture used for washing the crude reaction product was the same as the volume ratio used in the synthesis step. The amount of octadecylamine was the same as in Example 1.

Table 1 shows the EtOH/H₂O volume ratio used for the synthesis of the DMC amphiphile adducts, their elemental composition and the molecular formula derived therefrom. Table 2 shows the elemental composition of the catalysts obtained from the amphiphile adducts as well as the polymer yields obtained in copolymerization of CO₂ and propylene oxide and the catalyst activity calculated therefrom.

**Table 1: EtOH/H₂O volume ratio used for the synthesis of the DMC amphiphile adducts 2 to 4 and 1 (Examples 2 to 4 and 1), their elemental composition and the molecular formula derived therefrom**

| Adduct No. | Volume ratio EtOH/H₂O | Elementary analysis [wt.-%] | | | | | | | Molecular formula |
|---|---|---|---|---|---|---|---|---|---|
| | | N | C | H | O | Co | Zn | K | |
| 2 | 75:25 | 10.0 | 62.4 | 10.6 | 3.7 | 4.5 | 8.5 | 1.0 | Zn₃[Co(CN)₆]₂·6 ODA ·H₂O·3 EtOH 0.6 KNO₃ |
| 3 | 50:50 | 10.1 | 63.1 | 10.7 | 3.6 | 4.2 | 8.4 | 0.8 | Zn₃[Co(CN)₆]₂·6 ODA ·H₂O·3 EtOH 0.5 KNO₃ |
| 4 | 25:75 | 10.1 | 63.7 | 10.9 | 2.7 | 4.2 | 8.5 | 0.2 | Zn₃[Co(CN)₆]₂·6 ODA ·H₂O·3 EtOH·0.1 KNO₃ |
| 1 | 10:90 | 10.1 | 62.8 | 10.7 | 3.4 | 4.1 | 8.6 | 0.3 | Zn₃[Co(CN)₆]₂·6 ODA·H₂O·3 EtOH 0.2 KNO₃ |

| | | | | | | | | | |
|---|---|---|---|---|---|---|---|---|---|
| (ODA = octadecyl amine; EtOH = ethanol) | | | | | | | | | |

**Table 2: Elemental composition catalysts and their catalytic activity for the copolymerization of CO₂ and propylene oxide**

| Catalyst No. | Elementary analysis | | | | | | | Polymer yield^{b} [g] | TOF [h⁻¹] |
|---|---|---|---|---|---|---|---|---|---|
| | wt.-%] | | | | | | | | |
| | N | C | H | O | Co | Zn | K | | |
| 2 | 13.7 | 54.3 | 8.3 | 2.6 | 6.9 | 14.6 | 0.6 | 22.9 | 392.1 |
| 3 | 14.2 | 52.6 | 8.0 | 3.2 | 7.2 | 14.9 | 1.0 | 26.6 | 446.3 |
| 4 | 14.5 | 53.1 | 8.0 | 2.33 | 7.3 | 15.0 | 0.2 | 29.1 | 485.0 |
| 1 | 14.9 | 51.5 | 7.6 | 2.8 | 7.4 | 15.8 | 0.3 | 43.2 | 683.5 |

| | | | | | | | | | |
|---|---|---|---|---|---|---|---|---|---|
| b: Copolymerization of CO₂ and propylene oxide, p(CO₂) = 30 bar, T = 60°C, t = 4 h, 50 ml PO, 0.1 g of DMC catalyst TOF: turnover frequency (mass of polymer per mass of Zn and time) | | | | | | | | | |

### Example 5: Large scale preparation of catalyst 1

This example illustrates that the catalyst 1 can also be prepared in a larger scale. 178 g (0.660 mol) of octadecylamine were dispersed in 0.5 L of ethanol in a glass reactor (10 L) equipped with an overhead stirrer. Subsequently, 4.5 L of water were added to form a mixture of ethanol and water having a volume ratio of 1:9. 89.0 g (0.300 mol) of zinc nitrate hexahydrate were added to the viscous ethanol-water mixture. After stirring for 1 hour a homogeneous dispersion was obtained. 63.0 g (0.190 mol) of potassium hexacyanocobaltate were added to this dispersion. The resulting mixture was stirred at room temperature for 20 hours. Then, the obtained solid was separated by filtration over a Büchner funnel, washed three times with a mixture of ethanol and water and separated again. Finally, the colorless solid was dried under a dynamic vacuum at 50 °C for 48 hours.

The DMC octadecylamine adduct (230.0 g) obtained thereby was crushed with a glass rod and heated under vacuum to 130 °C. Intermittently the residue was crushed again with a glass rod. Then, octadecylamine was evaporated and therefore removed from the synthesis residue. The obtained catalyst showed an activity (TOF = 450 g polymer per gram of zinc and hour) in the copolymerization of propylene oxide and CO₂ which is comparable to the catalyst prepared in a smaller scale (Catalysts 1-4).

### Comparative Example 1: Prior art catalyst (Catalyst 8)

A DMC catalyst was prepared according to Example 1 of WO 2004/000913. The obtained filter cake was dried according to the same drying procedure as applied in Examples 1 to 4, i.e. 5.0 g of a DMC filter cake were heated under vacuum to 130 °C for 40 hours. 2.6 g of a colorless solid were obtained. The obtained catalyst is a standard catalyst used in industry.

### Example 6: Copolymerization of CO₂ and propylene oxide

The performance of the catalysts according to Examples 1 to 4 and Comparative Example 1 was investigated in the copolymerization of CO₂ and propylene oxide at 60°C using a CO₂ pressure of 30 bar and a catalyst concentration of 0.2 wt.-%. 100 mg of catalyst were put into a laboratory autoclave (300 ml, Parr Instrument Company, Model 4560) equipped with propeller mixer. The autoclave was closed, evacuated and pressurized with 10 bar of CO₂. Then 50 ml of propylene oxide were added to the reactor via an HPLC pump (Bischoff Analysentechnik und Geräte GmbH, HPD Multitherm 200). The reaction mixture was stirred at 150 rpm. After heating the reaction mixture to 60°C it was pressurized with 30 bar of CO₂. After 4 hours the polymerization was quenched by cooling the reaction mixture to room temperature, releasing the pressure and removing propylene oxide under vacuum. Table 2 shows the polymer yield and the corresponding turnover frequency obtained with Catalysts 1 to 4. In addition, Table 3 shows the carbonate content, molar mass, polymer yield and polydispersity obtained with Catalysts 1 and 8.

**Table 3: Catalytic performance in the copolymerization of CO₂ and propylene oxide with Catalysts 1 (Example 1) and 8 (Comparative Example 1)**

| Run | Catalyst No. | Polymer yield [g] | Induction period [min] | Carbonate content [mol-%] | Mₙ [kg/mol] | Polydispersity |
|---|---|---|---|---|---|---|
| 1 | 1 | 43.2 | 0 | 70 | 45.7 | 2.8 |
| 2 | 8 | 55.1 | 150 | 40 | 16.7 | 8.5 |

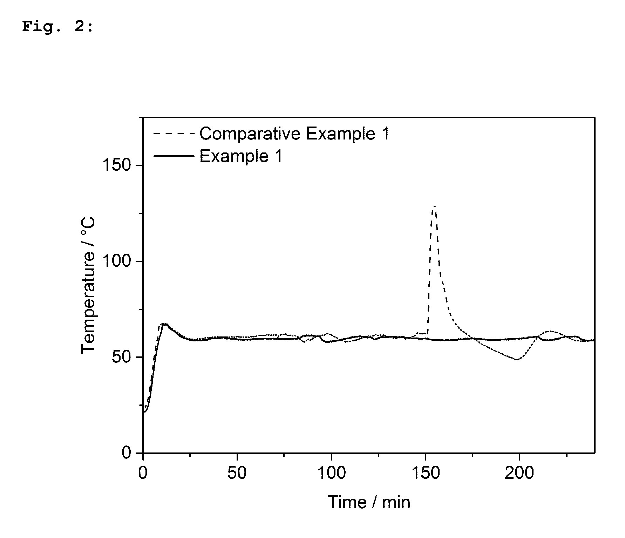

Figure 2 shows the temperature of the polymerization reaction as a function of the reaction time in Runs 1 and 2. Moreover,

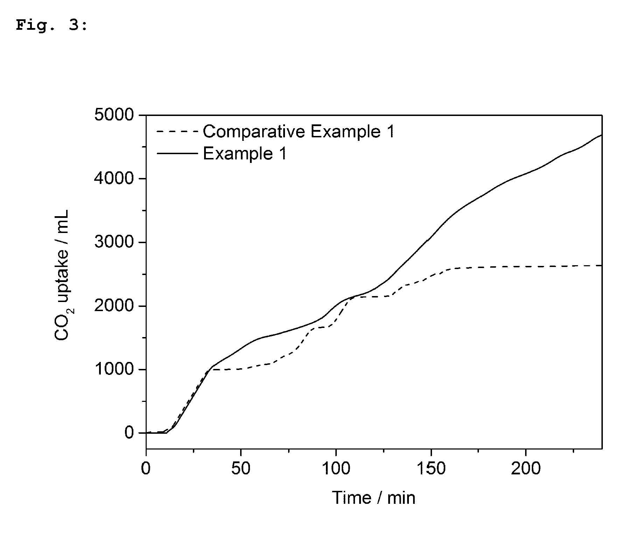

Figure 3 shows the CO₂ uptake, which is an indicator for the copolymerization rate, as a function of the reaction time in Runs 1 and 2. In case of Catalyst 1 the reaction temperature was about 60°C throughout the entire polymerization reaction.

Immediately after arriving at the desired reaction temperature a CO₂ uptake was obtained. Accordingly, an induction period did not occur. In contrast to this, Catalyst 8 prepared according to Comparative Example 1 shows a different behavior. Using this catalyst the reactor temperature was constant at 60°C up to a reaction time of 150 minutes. During this time the CO₂ up-take rate was somewhat lower than that of Catalyst 1. However, after 150 min a temperature peak occurred when using Catalyst 8, i.e. the reactor temperature suddenly increased from 60 to 140°C. Thus, Catalyst 8 arrived at its maximum activity only about 150 minutes after start of the reaction and the induction period was more than 2 hours.

The polymer produced with Catalyst 1 was a polyether carbonate having a carbonate content of 70 mol-%, a number average molecular weight (Mₙ) of 46 kg·mol⁻¹ and a polydispersity of 2.8. The polymer produced with Catalyst 8 was a polyether carbonate having a lower carbonate content of 40 mol-%, a molecular weight Mₙ of 17 kg·mol⁻¹ and a polydispersity of 8.5. A comparison between the polymer yields shows that both catalysts have a similar activity with respect to the copolymerization of CO₂ and propylene oxide.

### Example 7: Homopolymerization of polyethylene oxide

It is known that the molecular weight of polymers prepared with DMC catalysts according to the prior art can be controlled by using different amounts of a starter substance. This enables the synthesis of tailor-made polymers. The following experiments are intended to illustrate that such a control of the molecular weight can also be achieved when using the DMC catalyst according to the invention.

50 mg of Catalyst 1 and different amounts of propylene glycol were put into a laboratory autoclave (300 ml, Parr Instrument Company, Model 4560) equipped with propeller stirrer. The autoclave was closed, evacuated, pressured with 10 bar of argon and 50 ml of propylene oxide were fed into the reactor via an HPLC pump (Bischoff Analysentechnik und Geräte GmbH, HPD Multitherm 200). The reaction mixture was stirred at 150 rpm and heated to a temperature of 70°C. After 4 hours the polymerization was quenched by cooling to room temperature, releasing the pressure and removing excessive propylene oxide under vacuum. Table 4 shows some polymerization conditions used as well as some polymer properties.

**Table 4: Homopolymerization of propylene oxide with controlled molecular weight**

| Catalyst No. | Starter | Amount of starter [ml] | Concentration of starter [mmol/l] | Mₙ [g/mol] | Polydispersity | Polymer yield [g] |
|---|---|---|---|---|---|---|
| 1 | PG | 0.5 | 135 | 2,700 | 3.9 | 18.3 |
| 1 | PG | 0.1 | 27 | 4,800 | 3.5 | 18.2 |
| 1 | - | 0 | 0 | 5,500 | 3.5 | 17.9 |

| | | | | | | |
|---|---|---|---|---|---|---|
| PG: 1,3-propylene glycol | | | | | | |

The number average molecular weight obtained without use of starter compound was 5.5 kg·mol⁻¹. This molecular weight was decreased to 4.8 and 2.7 kg·mol⁻¹, respectively, by using 27 or 135 mmol/l of polyethylene glycol, respectively. The addition of propylene glycol did not have a negative effect on polymer yield, i.e. catalyst activity. The polymers produced by using Catalyst 1 are clear and less colored compared to polymer products obtained with Catalyst 8 under similar polymerization conditions.

## Claims

1. Process for preparing a double metal cyanide catalyst of Formula I
Mₐ[M' (CN)_{c}Z_{w}]_{b}·zA (I),
wherein
M is a main group or transition metal cation,
M' is a main group or transition metal cation, which can be the same or different from M,
Z is an anion or ligand other than cyanide,
A is an amphiphilic agent selected from heteroatom-containing organic compounds having at least one polar head group and an aliphatic, aromatic or partially aromatic moiety having a number of 6 to 42 carbon atoms,
w is an integer greater than or equal to 0, but lower than c,
a, b and c are integers greater than or equal to 1 so that catalyst (I) is electrically neutral, and
z is a number from 0 to 12,
comprising
(a) reacting a metal salt of Formula II
MₑX_{f} (II),
wherein
X is an anion and
e and f are integers greater than or equal to 1 so that metal salt (II) is electrically neutral,
with a cyanometallate complex of Formula III
D_{g}[M'(CN)_{c}]_{b} (III),
wherein
D is a cation and
g is an integer greater than or equal to 1 so that complex (III) is electrically neutral, and
M', Z, c, w and b are defined as described above,
in the presence of the amphiphilic agent A and optionally a solvent L to obtain a double metal cyanide adduct of Formula IV
Mₐ[M' (CN)_{c}]_{b}·xA·yL (IV),
wherein x is a number greater than or equal to 1 and y is a number greater than or equal to 0; and
(b) thermally treating the adduct (IV) to obtain the double metal cyanide catalyst of Formula (I).

2. Process according to claim 1, wherein the amphiphilic agent A is a primary, secondary or tertiary aliphatic alcohol, amine, thiol, carboxylic acid and/or phosphane, wherein the aliphatic moiety preferably has a number of 16 to 20 carbon atoms.

3. Process according to claim 1 or 2, wherein the amphiphilic agent A is a primary aliphatic unbranched amine or carboxylic acid which is saturated or partially unsaturated.

4. Process according to any one of claims 1 to 3, wherein the amphiphilic agent A is selected from the group consisting of n-hexadecylamine, n-octadecylamine, n-eicosylamine, oleylamine, octadecatrien-1-amine and combinations thereof.

5. Process according to any one of claims 1 to 4, wherein cation M is selected from the group consisting of Ag(I), Al(III), Ce(III), Ce(IV), Cd(II), Co(II), Co(III), Cr(II), Cr(III), Cu(II), Eu (III), Fe(II), Fe(III), La (III), Mg (II), Mn(II), Mo(IV), Mo (VI), Ni(II), Pb(II), Rh(II), Ru(II), Ru(III), Sn(II), Sn(IV), Sr(II), Ti(III), Ti(IV), V(V) V(IV), W(IV), W(VI), Zn(II) and mixtures thereof.

6. Process according to any one of claims 1 to 5, wherein cation M' is selected from the group consisting of Co(II), Co(III), Cr(II), Cr(III), Fe(II), Fe(III), Ir(III), Mn(II), Mn(III), Ni(II), Rh(III), Ru(II), V(IV), V(V) and mixtures thereof.

7. Process according to any one of claims 1 to 6, wherein anion X is selected from the group consisting of acetate, acetylacetonate, carboxylate, carbonate, cyanate, cyanide, dihydrogen phosphate, halide, such as chloride, bromide and iodide, hexafluorophosphate, hydroxide, hydrogen carbonate, hydrogen phosphate, hydrogen sulfate, isocyanate, isothiocyanate, nitrate, nitrite, oxalate, perchlorate, phosphate, sulfate, tetrafluoroborate, tetrakis(4-biphenylyl)borate tetrakis(4-tert-butylphenyl)borate, tetrakis[3,5-bis(1,1,1,3,3,3-hexafluoro-2-methoxy-2-propyl)phenyl]borate tetrakis[3,5-bis(trifluoro-methyl)phenyl]borate, tetrakis(pentafluorophenyl)borate, tetra(p-tolyl)borate, tetraphenylborate, thiocyanate, vanadate and mixtures thereof.

8. Process according to any one of claims 1 to 7, wherein cation D is selected from alkali metal ions, earth alkali metal ions, non-metallic cations and mixtures thereof.

9. Process according to any one of claims 1 to 8, wherein solvent L is selected from water, alcohols, such as aliphatic alcohols having 1 to 6 carbon atoms like ethanol, methanol, n-propanol, and iso-propanol, ethers, esters, ketones, aldehydes, alkanes, halogenated hydrocarbons, aromatics, sulfoxides, amides, amines, ionic liquids and mixtures thereof.

10. Process according to claim 9, wherein solvent L is a mixture of water and ethanol, wherein the mixture preferably has a volume ratio of ethanol to water ranging from 100:1 to 1:100, more preferably from 3:1 to 1:9.

11. Process according to any one of claims 1 to 10, wherein the ratio of x to a is ranging from 1:10 to 10:1 and preferably from 2:1 to 4:1 and more preferably is about 2:1.

12. Process according to any one of claims 1 to 11, wherein in step (b) the adduct IV is heated to a temperature of 100 to 400 °C.

13. Process according to any one of claims 1 to 12, wherein the catalyst I is Zn₃[Co(CN)₆]₂ or Zn₃[Fe(CN)₆]₂.

14. Double metal cyanide catalyst of Formula I
Mₐ[M' (CN)_{c}Z_{w}]_{b}·zA (I),
obtainable by a process according to any one of claims 1 to 13.

15. Use of the double metal cyanide catalyst according to claim 14 in polymerization reactions, wherein the polymerization preferably is a hompolymerization of an alkylene oxide, such as propylene oxide, or a copolymerization or terpolymerization of two or three monomers selected from alkylene oxides, CO₂, cyclic carboxylic acid anhydrides, cyclic carboxylic acid esters and cyclic carboxylic acid amides.
